(19) **Europäisches Patentamt / European Patent Office / Office européen des brevets**

(11) **EP 4 246 903 A1**

(12) **EUROPEAN PATENT APPLICATION**

(43) Date of publication:
20.09.2023 Bulletin 2023/38

(21) Application number: 23162171.5

(22) Date of filing: 15.03.2023

(51) International Patent Classification (IPC):
$H04L\ 25/02^{(2006.01)}$   $H04L\ 25/497^{(2006.01)}$

(52) Cooperative Patent Classification (CPC):
H04L 25/0226; H04L 25/4975

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.03.2022 US 202263319977 P
30.08.2022 US 202263373902 P
16.02.2023 US 202318110541

(71) Applicant: Qorvo US, Inc.
Greensboro, NC 27409 (US)

(72) Inventors:
• DOTLIC, Igor
  Dublin D08 T6Ya (IE)
• MCELROY, Ciaran
  Dublin D08 T6Ya (IE)
• MCLAUGHLIN, Michael
  Dublin D08 T6Ya (IE)

(74) Representative: D Young & Co LLP
120 Holborn
London EC1N 2DY (GB)

(54) **SYSTEMS AND METHODS FOR CHANNEL ESTIMATION**

(57) Systems and methods for channel estimation are disclosed. In one aspect, supercomplementary sets (SCSs) of sequences are defined and more optionally, but more particularly, supercomplementary zero-sum cross-correlation (SZC) sequence blocks are created from the SCSs and transmitted to a receiver. The receiver receives a signal that includes the SCSs or SZC sequence block(s) deformed by a channel frequency offset (CFO). The receiver may correlate the signal with the known SCS or SZC to create a signal with minimal or no side lobes from which the CFO may be removed and a channel estimate formed. Based on the channel estimate, a distance between transmitter and receiver may be determined and used for other purposes, such as the provision of location-based services.

FIG. 1

**Description**

**PRIORITY APPLICATIONS**

The present application claims priority to U.S. Provisional Patent Application Serial No. 63/319,977 filed on March 15, 2022, and entitled "LOW-COMPLEXITY CHANNEL ESTIMATION USING SUPERCOMPLEMENTARY BLOCKS OF SEQUENCES," the contents of which is incorporated herein by reference in its entirety.
The present application also claims priority to U.S. Provisional Patent Application Serial No. 63/373,902 filed on August 30, 2022, and entitled "SYSTEMS AND METHODS FOR CHANNEL ESTIMATION," and to U.S. Patent Application Serial Number 17.110,541 filed on 16 February 2023, and entitled "SYSTEMS AND METHODS FOR CHANNEL ESTIMATION" the contents of which are incorporated herein by reference in its entirety.

**BACKGROUND**

**I. Field**

The technology of the disclosure relates generally to channel estimation that may be used, for example, for range finding.

**II. Background**

Computing devices abound in modem society, and more particularly, mobile communication devices have become increasingly common. The prevalence of these mobile communication devices is driven in part by the many functions that are now enabled on such devices. Increased processing capabilities in such devices means that mobile communication devices have evolved from pure communication tools into sophisticated mobile entertainment centers, thus enabling enhanced user experiences. Many services provided to mobile communication devices may depend on a location of the mobile communication device (i.e., so-called "location-based services"). Many techniques have been developed to find a distance between a transmitter and an object. The advent of ultra-wideband (UWB) communication has seen the development of real-time localization systems (RTLS), many of which are based on IEEE 802.15.4 (published by IEEE in 2015) and an amendment published in 2020, namely IEEE 802.15.4z. These standards leave open many implementation details and leave room for innovation.

**SUMMARY**

Particular aspects are set out in the appended independent claims. Various optional embodiments are set out in the dependent claims.
Aspects disclosed in the detailed description include systems and methods for channel estimation. In a particular aspect, supercomplementary sets (SCSs) of sequences are defined and more optionally, but more particularly, supercomplementary zero-sum cross-correlation (SZC) sequence blocks are created from the SCSs and transmitted to a receiver. The receiver receives a signal that includes the SCSs or SZC sequence block(s) deformed by a channel frequency offset (CFO). The receiver may correlate the signal with the known SCS or SZC to create a signal with minimal or no side lobes from which the CFO may be removed and a channel estimate formed. Based on the channel estimate, a distance between a transmitter and the receiver may be determined and used for other purposes, such as the provision of location-based services.
In this regard, in one aspect, a source is disclosed. The source comprises an antenna. The source also comprises a transceiver coupled to the antenna. The source also comprises a control circuit coupled to the transceiver. The control circuit is configured to cause the transceiver to send a complementary low-sum cross-correlation (CLS) sequence block to a remote device for ranging.
In another aspect, a mobile device is disclosed. The mobile device comprises an antenna. The mobile device also comprises a receiver coupled to the antenna, the receiver comprising a correlator. The mobile device also comprises a control circuit coupled to the receiver. The control circuit is configured to cause the correlator to correlate a received signal with a CLS sequence block to derive a channel estimate.
In another aspect, a method of determining distance is disclosed. The method comprises transmitting a CLS sequence block from a source to a remote device. The method also comprises, at the remote device, correlating a received version of the CLS sequence block with a known CLS sequence block to derive a channel estimate. The method also comprises removing a carrier frequency offset from the channel estimate. The method also comprises sending information derived from the channel estimate from the remote device to the source.

**BRIEF DESCRIPTION OF THE DRAWINGS**

Figure 1 is a block diagram of an example location-finding system with a mobile terminal being detected by a source;
Figure 2 is a block diagram of a receiver within the mobile terminal of Figure 1, where the receiver correlates a received signal with a known sequence before removing a carrier frequency offset; and
Figure 3 is a flowchart illustrating an example process for determining a location of the mobile terminal according to example aspects of the present disclosure.

**DETAILED DESCRIPTION**

The embodiments set forth below represent the necessary information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

It will be understood that although the terms first, second, etc. may be used herein to describe various elements, these elements should not be limited by these terms. These terms are only used to distinguish one element from another. For example, a first element could be termed a second element, and similarly, a second element could be termed a first element without departing from the scope of the present disclosure. As used herein, the term "and/or" includes any and all combinations of one or more of the associated listed items.

It will be understood that when an element such as a layer, region, or substrate is referred to as being "on" or extending "onto" another element, it can be directly on or extend directly onto the other element, or intervening elements may also be present. In contrast, when an element is referred to as being "directly on" or extending "directly onto" another element, no intervening elements are present. Likewise, it will be understood that when an element such as a layer, region, or substrate is referred to as being "over" or extending "over" another element, it can be directly over or extend directly over the other element, or intervening elements may also be present. In contrast, when an element is referred to as being "directly over" or extending "directly over" another element, no intervening elements are present. It will also be understood that when an element is referred to as being "connected" or "coupled" to another element, it can be directly connected or coupled to the other element, or intervening elements may be present. In contrast, when an element is referred to as being "directly connected" or "directly coupled" to another element, no intervening elements are present.

Relative terms such as "below" or "above" or "upper" or "lower" or "horizontal" or "vertical" may be used herein to describe a relationship of one element, layer, or region to another element, layer, or region as illustrated in the Figures. It will be understood that these terms and those discussed above are intended to encompass different orientations of the device in addition to the orientation depicted in the Figures.

The terminology used herein is for the purpose of describing particular embodiments only and is not intended to be limiting of the disclosure. As used herein, the singular forms "a," "an," and "the" are intended to include the plural forms as well unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Aspects in the detailed description include systems and methods for channel estimation. In a particular aspect, supercomplementary sets (SCSs) of sequences are defined and more optionally, but more particularly, supercomplementary zero-sum cross-correlation (SZC) sequence blocks are created from the SCSs and transmitted to a receiver. The receiver receives a signal that includes the SCSs or SZC sequence block(s) deformed by a channel frequency offset (CFO). The receiver may correlate the signal with the known SCS or SZC to create a signal with minimal or no side lobes from which the CFO may be removed and a channel estimate formed. Based on the channel estimate, a distance between a transmitter and the receiver may be determined and used for other purposes, such as the provision of location-based services.

Example aspects of the present disclosure are well suited for real-time localization systems (RTLS) in impulse radio ultra-wideband (UWB) devices that use the IEEE 802.15.4 and 802.15.4z standards. These standards, and 802.15.4z in particular, require that the ranging signal from the source be transmitted without a guard interval. This requirement makes the use of certain channel impulse response (CIR) estimation processes non-compliant. Specifically, conventional CIRs may rely on scrambled timestamp sequences (STSs) consisting of aperiodic pseudorandom sequences located after a synchronization header packet. STS was introduced to create a CIR estimation field resilient to distance-reduction attacks. Conventional use of STS causes CFO deformation, which would normally be addressed by adding a guard interval longer than CIR. However, as noted, 802.15.4z prohibits such guard intervals.

Thus, example aspects of the present disclosure contemplate the use of SZC formed from SCSs. This provides CIR estimation without any correlation artifacts with arbitrary sequence deformation consistent across a sequence block. This allows for transmission without a guard interval and thus allows for compliance with 802.15.4z.

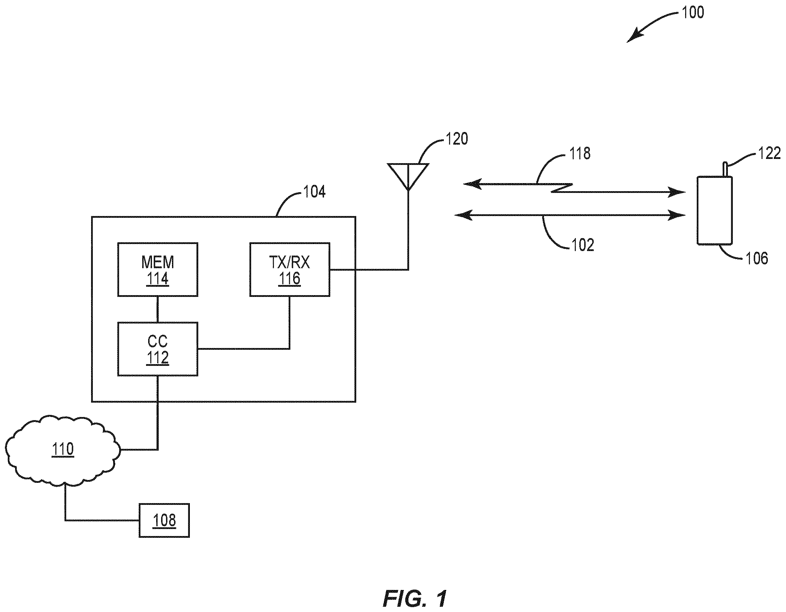

In this regard, Figure 1 is a block diagram of a location-finding system 100 where determining a distance 102 between a source 104, and a mobile device 106 (which may be considered a remote device relative to the source 104) may be desired. The source 104 may be provided at a fixed or known location and may be coupled to external devices 108 through networks 110 such as the Internet, the Public Switched Telephone Network (PSTN), or the like. Location-based services may be provided by the external devices 108 as is well known once the location of the mobile device 106 is determined.

The source 104 may further include a control circuit 112 coupled to a memory 114 and a transceiver 116. The source 104 may send and receive signals 118 through an antenna 120 using the transceiver 116. Operating software and/or signal symbols may be stored in the memory 114 as needed or desired.

The mobile device 106 may be any number of portable computing devices such as a smartphone, laptop, tablet, or the like and may include an antenna 122 through which signals may be received and sent.

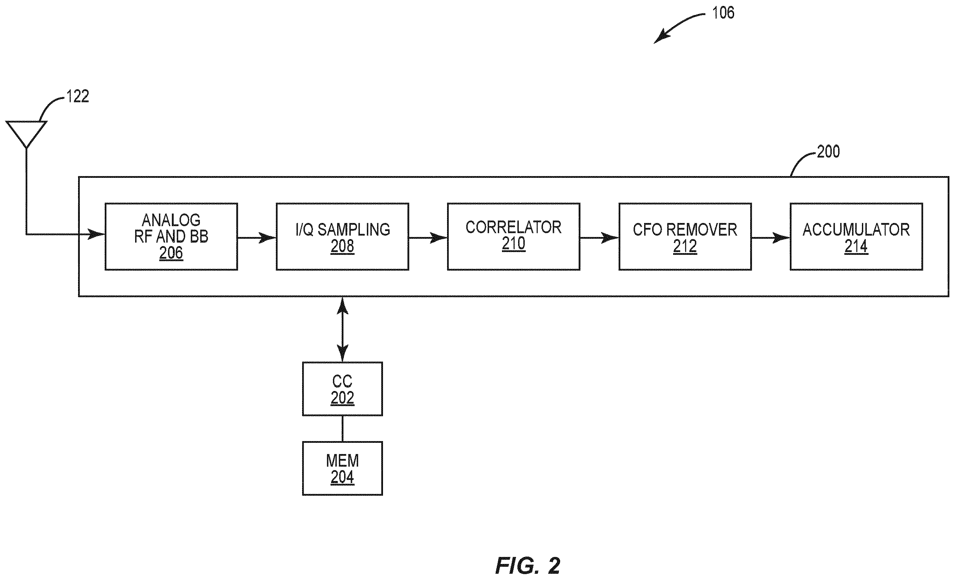

As better illustrated in Figure 2, the mobile device 106 may include a receiver 200 that couples to the antenna 122. The receiver 200 may operate with a control circuit 202 having a memory 204. The receiver 200 may include an analog radio frequency (RF) and baseband (BB) processing circuit 206 that takes a received RF signal (e.g., signals 118) and provides traditional front-end processing (e.g., amplification, filtering, down conversion to a BB frequency) and passes a baseband signal to an in-phase/quadrature (I/Q) sampling circuit 208. A sampled signal is passed to a correlator 210. The correlator 210 correlates the sampled signal with a known symbol from the SCS block, as better explained below. After correlation, the carrier frequency offset (CFO) is removed by a circuit 212, and the resulting signal is accumulated by an accumulator 214. This accumulated signal may then be used to provide a channel estimation from which the control circuit 202 may calculate a time of arrival (TOA) and/or a distance to the source 104. Alternatively, the control circuit 202 may send information related to the accumulated signal back to the source 104, and the control circuit 112 of the source 104 may perform calculations to get a distance. Based on the calculated distance, location-based services may be provided.

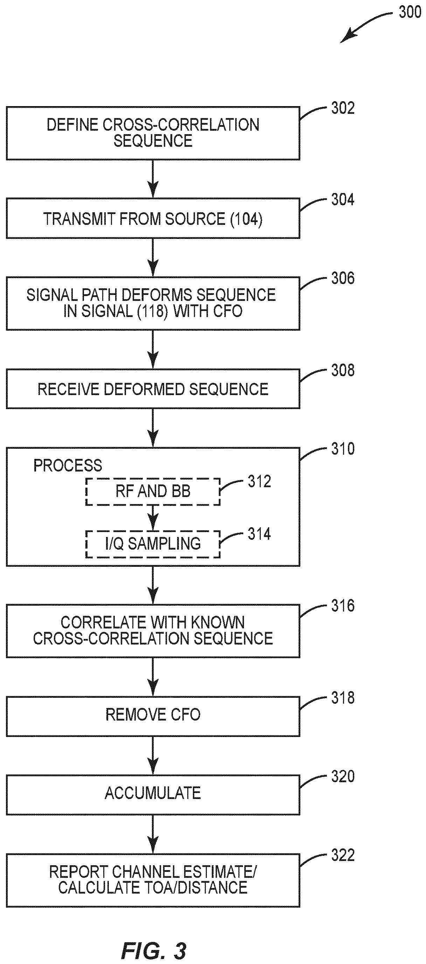

Figure 3 provides a flowchart outlining the processes of the present disclosure. Specifically, Figure 3 illustrates a process 300, which begins by defining a cross-correlation sequence (block 302). As explained in the math modeling section below, this cross-correlation set may be a supercomplementary set (SCS) of sequences, a supercomplementary zero-sum cross-correlation (SZC) sequence block constructed from SCSs, a complementary low-sum cross-correlation (CLS) sequence block, a complementary zero-sum cross-correlation (CZC) sequence block, or the like.

The known symbol or sequence or block of sequences is shared with possible mobile devices (e.g., by being defined in a specification, defined by an application downloaded to the mobile device, being present in a widget that an application on the mobile device may access, or the like). The source 104 then transmits a symbol or sequence (block 304). During transmission, the signal path deforms the symbol or sequence in the signals 118 with a CFO (block 306).

The mobile device 106, and particularly the receiver 200, receives the deformed symbol or sequence (block 308). Note that the receiver 200 is considered to be accurate in frequency, so from the receiver's perspective, the transmission is deformed with the CFO. The received signal is processed (block 310), including optional steps of RF and BB processing (block 312) by the analog RF and BB processing circuit 206 and I/Q sampling (block 314) by the I/Q sampling circuit 208.

The correlator 210 then correlates the sampled signal with a known cross-correlation sequence (block 316) that was previously populated and stored in the mobile device, such as in the memory 204. This correlation will, because of the complementariness of the sequence, provide a low or no sideband signal from which removal of the CFO is readily accomplished (block 318). The signal is then accumulated (block 320) by the accumulator 214.

From the correlated signal, a channel estimate may be formed. From the channel estimate, a TOA and/or a distance may be calculated (block 322). In a first example aspect, the channel estimate is calculated by the control circuit 202 and reported to the source 104, where the TOA and distance are determined. In a second example aspect, the control circuit 202 also calculates the TOA and/or the distance and reports to the source 104. In still another example aspect, the channel estimate is provided to a remote computing device (e.g., external device 108) which performs the calculations. From this calculation (wherever performed and to whatever reported), a decision about the provision of location-based services may be made.

While the hardware and basic process appear relatively straightforward, there is substantial work that must be done before the complementary sets used by the source 104 and the correlator 210 may be realized. The following section steps through the theory and the math that lies under the hardware and processes outlined above.

Accordingly, to assist in explaining the theory and math, a mathematical model of the receiver 200 with a single sample per preamble chip is used. However, it should be appreciated, in a real receiver, the sampling rate is higher than one sample per preamble chip; hence, a realistic model is up-sampled with regard to the model introduced here. Furthermore, a CFO also produces the effect of dilatation/expansion of the baseband signal in time since the same reference clock in the transmitter is used both for carrier and baseband signal generation. Therefore, baseband receiver processing also requires re-sampling. However, these considerations are omitted here for the sake of simplicity and without loss of generality.

As an initial foray into this discussion, a simplified model of the aperiodic preamble reception under 802.15.4 where the sampling rate is equal to the chip rate $f_p$ is provided. The preamble symbol duration is denoted $T_{sym} = R/f_p$, where R is symbol duration in chips. The first part of the $i$-th preamble symbol for $i \geq 0$ consists of a chip sequence $s_i(n)$, non-zero for $n = 0, 1, \dots ,N$ - 1 transmitted at $f_p$. The sequence $s_i(n)$ goes through the channel with the impulse response (CIR) denoted $h(n)$, non-zero for $n = 0, 1, \dots , M$ - 1 with $N + M - 1 \leq R$. Frequency offset between the transmitter and receiver is denoted $\Delta f$. The received sample sequence for $i$-th symbol is non-zero for $0 \leq n \leq N + M$ - 2:

$$r_i(\nu, n) = e^{j\varphi i} \ \tilde{s}_i(\nu, n) \otimes h(n). \qquad (1)$$

Here, "$\otimes$" denotes aperiodic convolution, $v = \Delta f/fp$ is the discrete-time frequency offset, and $\varphi = 2\pi vR$ is the phase offset between consecutive symbols, and $\tilde{s}_i(v,n)$ - $s_i(n)e^{2\pi jvn}$ is a version of $s_i(n)$ deformed by CFO.

The correlator will correlate $r_i(v,n)$ with $s_i(n)$:

$$c_i(\nu, n) = r_i(\nu, n) \otimes s_i^*(-n). \qquad (2)$$

Equation (2) can be rewritten as

$$c_i(\nu, n) = \chi_{i,i}(\nu, n) \otimes h(n) e^{j\varphi i}. \qquad (3)$$

Here,

$$\chi_{l,m}(\nu, n) = \tilde{s}_l(\nu, n) \otimes s_m^*(-n), \qquad (4)$$

represents cross-AF (CAF) of $s_i(n)$ and $s_m(n)$ at frequency $v$, non-zero for $n = -N+1, \dots , 0, \dots , N$ - 1. For $m = l$, Equation (4) represents an auto-ambiguity function (AF).

Frequency offset is removed after correlation and before accumulation by the carrier loop on a per-symbol basis. Therefore, the accumulator after $k$ preamble symbols has a form

$$d_k(\nu, n) = \sum_{i=0}^{k-1} c_i(\nu, n) e^{-j\varphi i},$$

$$= h(n) \otimes \sum_{i=0}^{k-1} \chi_{i,i}(\nu, n). \qquad (5)$$

Note that since causality is omitted in correlation Equation (2), $d_k(v,n)$ has non-zero values for $n = -N + 1, \dots , 0, \dots , N + M$ -2. Furthermore, $d_k(v,n)$ represents an estimate of $h(n)$ for $n = 0, 1, \dots ,M$ - 1. Hence, the accumulator needs to contain only these indices.

From Equation (5), the quality of the channel estimate after $k$ symbols depends on the shape of the mean AF:

$$\overline{\chi}_k(\nu, n) = \frac{1}{k} \sum_{i=0}^{k-1} \chi_{i,i}(\nu, n), \tag{6}$$

that is, the level of its main lobe and its sidelobes.

Auto-AFs of an SCSS are complementary, and thus, the application of SCSSs in this scenario is straightforward. For $k = I$, where $I$ is the size of the SCSS used

$$\overline{\chi}_I(\nu, n) = \delta(n) A(\nu), \tag{7}$$

holds, where $A(v)$ is the complex amplitude of the main lobe. Equations (5) and (7) yield

$$d_I(\nu, n) = I A(\nu) h(n), \tag{8}$$

which represents a perfect channel estimation.

For unity-level ($|s_i(n)| = 1$) sequences of length $N$ from Equation (4) follows

$$\chi_{i,i}(\nu, 0) = A(\nu) = \frac{\operatorname{sinc}(N\nu)}{\operatorname{sinc}(\nu)} N \, e^{j\pi(N-1)\nu}. \tag{9}$$

Therefore, increasing CFO decreases the level of the channel estimation and rotates it but does not produce any correlation artifacts via sidelobes of $\overline{X}_I(v, n)$.

Consider a case in which $R = N$, that is, in which the preamble symbols are transmitted without any guard interval. The condition for the length of the channel is now $M \le N$. Due to the two adjacent symbols now overlapping with the current one in the channel, for $I$ transmitted symbols, Equation (1) becomes

$$r_0(\nu, n) = \left[ \bar{s}_0(\nu, n) + \bar{s}_1(\nu, n - N) e^{j\varphi} \right] \otimes h(n), \tag{10a}$$

$$r_i(\nu, n) = \left[ \bar{s}_{i-1}(\nu, n + N) e^{-j\varphi} + \bar{s}_i(\nu, n) + \right.$$

$$\left. + \bar{s}_{i+1}(\nu, n - N) e^{j\varphi} \right] \otimes h(n) e^{j\varphi i}, \tag{10b}$$

$$\text{for } 1 \le i \le I - 2,$$

$$r_{I-1}(\nu, n) = \left[ \tilde{s}_{I-2}(\nu, n+N)\, e^{-j\varphi} + \right.$$
$$\left. + \tilde{s}_{I-1}(\nu, n) \right] \otimes h(n)\, e^{j\varphi(I-1)}, \tag{10c}$$

for $0 \leq n \leq N$ - 1. By following a similar line of derivation as the foregoing, expression for the accumulator samples after all $I$ symbols is now

$$d_I(\nu, n) = h(n) \otimes \left[ e^{-j\varphi} \sum_{i=1}^{I-1} \chi_{i,i-1}(\nu, n-N) + \right.$$
$$\left. + \sum_{i=0}^{I-1} \chi_{i,i}(\nu, n) + e^{j\varphi} \sum_{i=0}^{I-2} \chi_{i,i+1}(\nu, n+N) \right], \tag{11}$$

for $0 \leq n \leq N$ - 1.

As noted previously, auto-AFs within an SCSS are complementary. However, this does not hold for the adjacent symbol CAFs in Equation (11), which generally do not complement. To overcome this problem, consider the following construct. Consider a case in which a block of $I$ symbols is transmitted without a guard interval, as previously. However, now samples of 0-th symbol for $n$ = -$N$ + 2, ..., -1 are correlated with a sequence $s_{-1}(n)$ and accumulated into $d(1)$, ... , $d(N$ - 1). Similarly, samples of $I$ - 1-th symbol for $n$ = $N$, ..., 2$N$ - 2 are correlated with a sequence $s_I(n)$ and accumulated into $d(0)$, ... , $d(N$ - 2). Then, Equation (11) becomes

$$d_I(\nu, n) = h(n) \otimes \sum_{i=0}^{I-1} \left[ e^{-j\varphi} \chi_{i,i-1}(\nu, n-N) + \right.$$
$$\left. + \chi_{i,i}(\nu, n) + e^{j\varphi} \chi_{i,i+1}(\nu, n+N) \right], \tag{12}$$

for $0 \leq n \leq N$ - 1.

Now, an SCSB $g_i(n)$ is constructed from $s_i(n)$ of size $I$:

$$g_i(n) = \begin{cases} -s_{I-1}(n) & \text{for } i = -1, \\ s_i(n) & \text{for } 0 \leq i \leq I-1, \\ (-1)^{i-I} s_{i-I}(n) & \text{for } I \leq i \leq 2I-1, \\ (-1)^I s_0(n) & \text{for } i = 2I. \end{cases} \tag{13}$$

Sequences $g_{-1}(n)$ and $g_{2I}(n)$ are not transmitted but only are used in the receiver correlation, such as when deriving Equation (12); hence, the size of the transmitted sequence block is 2$I$.

From Equation (13), the block $g_i(n)$

$$\chi_{i,i+1}(\nu,n) = -\chi_{i+I,i+I+1}(\nu,n), \qquad (14a)$$

$$\chi_{i,i-1}(\nu,n) = -\chi_{i+I,i+I-1}(\nu,n), \qquad (14b)$$

for $i = 0, \dots, I - 1$ holds. Equations (7), (12), and (14) yield

$$d_{2I}(\nu,n) = 2I\,A(\nu)h(n), \qquad (15)$$

which represents a perfect channel estimation with the complex level reduction due to CFO, as in Equation (8).

If $I$ is even, from Equation (14) follows that $g_{-1}(n) = g_{2I-1}(n)$ and $g_{2I}(n) = g_0(n)$. Therefore, SCSB $g_i(n)$ repeatedly transmitted $L$ times without a guard interval produces $d_{2I}(v,n)$ (Equation 15) scaled $L$ times, providing $g_{-1}(n)$ and $g_{2I}(n)$ are, as previously, used in the correlation of the precursors of 0-th transmitted symbol and the post-cursors of the last transmitted symbol, respectively.

Furthermore, the foregoing derivation holds if in $\tilde{s}_i(v,n)$, besides deformation by the frequency offset, other deformations, consistent from symbol to symbol, for example, video clipping, are included. Therefore, SCSB $g_i(n)$ is supercomplementary but now without a guard interval.

In a typical implementation, the device, according to the present disclosure, would have SCSS $s_i(n)$ in the memory and generate SCSB $g_i(n)$ from $s_i(n)$ and inversion logic based on the symbol counter - $i$, according to Equation (13).

When using an SCSB as previously described, the basic sequence block $s_i(n)$ may be any SCSS constructed by any of a number of methods. For sequences of length $N$, minimal SCSS size is $I = N$. Therefore, $s_i(n)$ and $g_i(n)$ minimally have $N^2$ and $2N^2$ chips, respectively. In some scenarios, to minimize on-air time, it is useful to transmit only the $s_i(n)$ block, that is, the first half of the $g_i(n)$ block without any guard interval. Therefore, it is worthwhile to construct an SCSS-based $s_i(n)$ block with good correlation properties. This is done at $v = 0$, as, generally, full complementing over deformations such as CFO cannot be expected. Correlation between $S_i(n)$ and $s_m(n)$ is denoted $c_{l,m}(n) = X_{l,m}(n, 0)$. Correlation is done as in Equation (12) by choosing $s_{-1}(n) = s_{I-1}(n)$ and $s_I(n) = s_0(n)$. For $v = 0$, Equation (12) becomes

$$d_I(0,n) = h(n) \otimes \sum_{i=0}^{I-1}\left[ c_{i,i-1}(n-N) + \right.$$
$$\left. + c_{i,i}(n) + c_{i,i+1}(n+N) \right], \qquad (16)$$

for $0 \le n \le N - 1$. With this choice, considering that from $c_{m,l}(n) = c^*_{l,m}(-n)$ holds from Equation (4), two sums of cross-correlations in Equation (16) are the following: $\sum_{i=0}^{I-1} c_{i,i-1}(n-N)$ and $\sum_{i=0}^{I-1} c_{i,i+1}(n+N)$ produce post-cursor and precursor cross-correlation sidelobes, respectively, that are conjugated mirror images of each other. Note that the same holds for the choice of $s_{-1}(n) = 0$ and $s_I(n) = 0$, which are not considered here.

Furthermore, since for SCSS the sidelobes of $c_{i,i}(n)$ fully complement, it is enough to observe only a single set of cross-correlation sidelobes:

$$sl(n) = \sum_{i=0}^{I-1} c_{i,i-1}(n), \qquad (17)$$

for $-(N - 1) \leq n \leq -1$.

Consider now that binary SCSS construction based on Walsh-Hadamard matrices can be easily expanded to polyphase or ternary SCSS designs. The search procedure of sidelobe minimization according to the present disclosure is as follows.

Construct normalized $N \times N$ normalized Hadamard matrix denoted $\mathbf{H}_N$ with $i$-th row representing $s_i(n)$ and then iteratively do the following.

    1) Do random row permutation of $\mathbf{H}_N$.
    2) Do random column permutation of $\mathbf{H}_N$.
    3) Calculate random binary ($\pm 1$) N $\times$ 1 column vector and multiply every column of $\mathbf{H}_N$ with it.
    4) Calculate random binary ($\pm 1$) 1 $\times$ N row vector and multiply every row of $\mathbf{H}_N$ with it.
    5) Calculate cross-sidelobes $sl(n)$ of $\mathbf{H}_N$ per Equation (17).
    6) Find $max\{|sl(n)|\}$ for $-(N - 1) \leq n \leq -1$.

The order of the steps 1 to 4 is unimportant and can be changed. These steps are consistent with the transformations that ensure $\mathbf{H}_N$ remains an SCSS. Furthermore, these transforms represent elementary transforms of Hadamard matrices; that is, the resulting matrix always remains Hadamard.

*If N is small enough and there is enough computing power, the search can be done deterministically instead of randomly.*

For $N = 8$, by using the foregoing procedure, Hadamard matrices with $max\{|sl(n)|\} = 0$ for $-(N - 1) \leq n \leq -1$, which are called ZCSSB, have been found. An example is Equation (18).

$$\mathbf{H}_8^0 = \begin{bmatrix} + & + & - & - & + & + & + & - \\ + & + & + & + & - & - & + & - \\ + & + & + & + & + & + & - & + \\ - & - & + & + & + & + & + & - \\ - & + & - & + & + & - & + & + \\ + & - & + & - & + & - & + & + \\ + & - & - & + & + & - & - & - \\ + & - & - & + & - & + & + & + \end{bmatrix}. \qquad (18)$$

Furthermore, by modifying the foregoing search criterion to minimize $max\{|sl(n)|\}$ for $-(N - 1) \leq n \leq (N - 1)$, an $N = 8$ ZCSSB, given in Equation (19), was found that has $sl(n) = 0$ for $-(N - 1) \leq n \leq (N - 1)$.

$$\mathbf{H}_8^1 = \begin{bmatrix} + & - & - & + & - & + & + & - \\ + & + & + & + & + & + & + & + \\ - & + & + & - & - & + & + & - \\ - & - & + & + & + & + & - & - \\ - & + & - & + & + & - & + & - \\ - & - & + & + & - & - & + & + \\ - & + & - & + & - & + & - & + \\ + & + & + & + & - & - & - & - \end{bmatrix}. \qquad (19)$$

Then, for $N = 16$, a ZCSSB was constructed from $H_8^1$ as in Equation (20).

$$\mathbf{H}_{16}^0 = \begin{bmatrix} \mathbf{H}_8^1 & \mathbf{H}_8^1 \\ \mathbf{H}_8^2 & -\mathbf{H}_8^2 \end{bmatrix}. \qquad (20)$$

In Equation (20), $H_8^2$ represents a version of $H_8^1$ with each second row inverted, as given in Equation (21).

$$\mathbf{H}_8^2 = \begin{bmatrix} + & - & - & + & - & + & + & - \\ - & - & - & - & - & - & - & - \\ - & + & + & - & - & + & + & - \\ + & + & - & - & - & - & + & + \\ - & + & - & + & + & - & + & - \\ + & + & - & - & + & + & - & - \\ - & + & - & + & - & + & - & + \\ - & - & - & - & + & + & + & + \end{bmatrix}. \qquad (21)$$

Direct search for $N \geq 16$ did not result in any ZCSSB, but only in LCSSB.

It is also noted that the operational steps described in any of the example aspects herein are described to provide examples and discussion. The operations described may be performed in numerous different sequences other than the illustrated sequences. Furthermore, operations described in a single operational step may actually be performed in a number of different steps. Additionally, one or more operational steps discussed in the example aspects may be combined. It is to be understood that the operational steps illustrated in the flowchart diagrams may be subject to numerous different modifications, as will be readily apparent to one of skill in the art. Those of skill in the art will also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Therefore, from one perspective, there have been disclosed systems and methods for channel estimation. In one aspect, supercomplementary sets (SCSs) of sequences are defined and more optionally, but more particularly, supercomplementary zero-sum cross-correlation (SZC) sequence blocks are created from the SCSs and transmitted to a receiver. The receiver receives a signal that includes the SCSs or SZC sequence block(s) deformed by a channel frequency offset (CFO). The receiver may correlate the signal with the known SCS or SZC to create a signal with minimal or no side lobes from which the CFO may be removed and a channel estimate formed. Based on the channel estimate, a distance between transmitter and receiver may be determined and used for other purposes, such as the provision of location-based services.

Further examples are set out in the following numbered clauses:

Clause 1. A source comprising: an antenna; a transceiver coupled to the antenna; and a control circuit coupled to the transceiver and configured to: cause the transceiver to send a complementary low-sum cross-correlation (CLS) sequence block to a remote device for ranging.

Clause 2. The source of clause 1, wherein the CLS sequence block comprises a complementary zero-sum cross-correlation (CZC) sequence block.

Clause 3. The source of clause 1 or 2, wherein the CLS sequence block comprises a supercomplementary set (SCS) sequence block.

Clause 4. The source of clause 1, 2 or 3, wherein the CLS sequence block comprises a supercomplementary zero-sum cross-correlation (SZC) sequence block.

Clause 5. The source of any preceding clause, further comprising a memory associated with the control circuit, the memory configured to store the CLS sequence block.

Clause 6. The source of clause 5, wherein the control circuit is configured to retrieve the CLS sequence block from the memory.

Clause 7. The source of any preceding clause, wherein the control circuit is further configured to receive information from the remote device through the antenna and transceiver responsive to having sent the CLS sequence block.

Clause 8. The source of clause 7, wherein the information comprises a channel estimate.

Clause 9. The source of clause 7 or 8, wherein the information comprises a time of arrival (TOA).

Clause 10. The source of clause 7, 8 or 9, wherein the information comprises a distance between the source and the remote device.

Clause 11. A mobile device comprising: an antenna; a receiver coupled to the antenna, the receiver comprising a correlator; and a control circuit coupled to the receiver and configured to: cause the correlator to correlate a received signal with a complementary low-sum cross-correlation (CLS) sequence block to derive a channel estimate.

Clause 12. The mobile device of clause 11, wherein the control circuit is further configured to remove a carrier frequency offset from a correlated signal from the correlator.

Clause 13. The mobile device of clause 11 or 12, further comprising a memory, wherein the control circuit is configured to retrieve the CLS sequence block from the memory.

Clause 14. The mobile device of clause 11, 12 or 13, wherein the CLS sequence block comprises a complementary zero-sum cross-correlation (CZC) sequence block.

Clause 15. The mobile device of any of clauses 11 to 14, wherein the CLS sequence block comprises a supercomplementary set (SCS) sequence block.

Clause 16. The mobile device of any of clauses 11 to 15, wherein the CLS sequence block comprises a supercomplementary zero-sum cross-correlation (SZC) sequence block.

Clause 17. The mobile device of any of clauses 11 to 16, wherein the control circuit is further configured to send information to a source, wherein the information is derived from the channel estimate.

Clause 18. The mobile device of clause 17, wherein the information comprises the channel estimate.

Clause 19. The mobile device of clause 17 or 18, wherein the information comprises a time of arrival (TOA).

Clause 20. A method of determining distance comprising: transmitting a complementary low-sum cross-correlation (CLS) sequence block from a source to a remote device; at the remote device, correlating a received version of the CLS sequence block with a known CLS sequence block to derive a channel estimate; removing a carrier frequency offset from the channel estimate; and sending information derived from the channel estimate from the remote device to the source.

The previous description of the disclosure is provided to enable any person skilled in the art to make or use the disclosure. Various modifications to the disclosure will be readily apparent to those skilled in the art, and the generic principles defined herein may be applied to other variations. Thus, the disclosure is not intended to be limited to the examples and designs described herein but is to be accorded the widest scope consistent with the principles and novel features disclosed herein.

**Claims**

1. A source comprising:

   an antenna;
   a transceiver coupled to the antenna; and
   a control circuit coupled to the transceiver and configured to:
   cause the transceiver to send a complementary low-sum cross-correlation (CLS) sequence block to a remote device for ranging.

2. The source of claim 1, wherein the CLS sequence block comprises a complementary zero-sum cross-correlation (CZC) sequence block.

3. The source of claim 1 or 2, wherein the CLS sequence block comprises a supercomplementary set (SCS) sequence block.

4. The source of claim 1, 2 or 3, wherein the CLS sequence block comprises a supercomplementary zero-sum cross-correlation (SZC) sequence block.

5. The source of any preceding claim, further comprising a memory associated with the control circuit, the memory configured to store the CLS sequence block, for example wherein the control circuit is configured to retrieve the CLS sequence block from the memory.

6. The source of any preceding claim, wherein the control circuit is further configured to receive information from the remote device through the antenna and transceiver responsive to having sent the CLS sequence block.

7. The source of claim 6, wherein the information comprises one or more selected from the group comprising: a channel estimate; a time of arrival (TOA); and a distance between the source and the remote device.

8. A mobile device comprising:

   an antenna;
   a receiver coupled to the antenna, the receiver comprising a correlator; and
   a control circuit coupled to the receiver and configured to:
   cause the correlator to correlate a received signal with a complementary low-sum cross-correlation (CLS) sequence block to derive a channel estimate.

9. The mobile device of claim 8, wherein the control circuit is further configured to remove a carrier frequency offset from a correlated signal from the correlator.

10. The mobile device of claim 8 or 9, further comprising a memory, wherein the control circuit is configured to retrieve the CLS sequence block from the memory.

11. The mobile device of claim 8, 9 or 10, wherein the CLS sequence block comprises a complementary zero-sum cross-correlation (CZC) sequence block.

12. The mobile device of any of claims 8 to 11, wherein the CLS sequence block comprises a supercomplementary set (SCS) sequence block.

13. The mobile device of any of claims 8 to 12, wherein the CLS sequence block comprises a supercomplementary zero-sum cross-correlation (SZC) sequence block.

14. The mobile device of any of claims 8 to 13, wherein the control circuit is further configured to send information to a source, wherein the information is derived from the channel estimate, for example wherein the information comprises one or more selected from the group comprising: the channel estimate; and a time of arrival (TOA); and a distance between the source and the remote device.

15. A method of determining distance comprising:

   transmitting a complementary low-sum cross-correlation (CLS) sequence block from a source to a remote device;
   at the remote device, correlating a received version of the CLS sequence block with a known CLS sequence block to derive a channel estimate;
   removing a carrier frequency offset from the channel estimate; and
   sending information derived from the channel estimate from the remote device to the source.

**FIG. 1**

EP 4 246 903 A1

**FIG. 2**

EP 4 246 903 A1

*FIG. 3*

Europäisches
Patentamt

European
Patent Office

Office européen
des brevets

# EUROPEAN SEARCH REPORT

**Application Number**

**EP 23 16 2171**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MANEESHA M S ET AL: "Complementary sequence based CFO estimation for OFDM systems using Simulink", 2017 INTERNATIONAL CONFERENCE ON INTELLIGENT COMPUTING, INSTRUMENTATION AND CONTROL TECHNOLOGIES (ICICICT), IEEE, 6 July 2017 (2017-07-06), pages 916-920, XP033334325, DOI: 10.1109/ICICICT1.2017.8342687 [retrieved on 2018-04-19] * 1. Introduction *  ----- | 1-15 | INV. H04L25/02 H04L25/497 |
| A | LI JINGXIA ET AL: "A High Signal-Noise Ratio UWB Radar for Buried Pipe Location Using Golay Complementary Sequences", APPLIED SCIENCES, vol. 9, no. 23, 1 December 2019 (2019-12-01), page 5090, XP093057544, ISSN: 2076-3417, DOI: 10.3390/app9235090 * the whole document *  ----- | 1-15 | |
| | | | TECHNICAL FIELDS SEARCHED (IPC) |
| | | | H04L |

The present search report has been drawn up for all claims

| Place of search | Date of completion of the search | Examiner |
|---|---|---|
| Munich | 26 June 2023 | Belloni, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................
& : member of the same patent family, corresponding document

EPO FORM 1503 03.82 (P04C01)

**EP 4 246 903 A1**

**Patent documents cited in the description**

- US 63319977
- US 63373902
- US 17110541 A